# EUROPEAN PATENT APPLICATION

(11) **EP 1 237 094 A1**
(43) Date of publication of application: **04.09.2002**
(21) Application number: 01101380.2
(22) Date of filing: 22.01.2001
(51) Int. Cl.: G06F 17/24

(54) **A method for determining rubies**

(71) Applicant: SUN MICROSYSTEMS, INC., Palo Alto, California 94303 (US)
(72) Inventor: Höger, Lutz, 20253 Hamburg (DE); Tesch, Falko, 22765 Hamburg (DE)
(74) Representative: Betten & Resch

(57) **Abstract**

A method for determining rubies for generating the display of a ruby annotation to an electronic document, said method comprising: receiving a user input by a first process running on a computer and operating on said electronic document as a working document to thereby select at least a portion of said electronic document as a base text for which a ruby annotation is to be generated; providing information on said at least one selected portion of said electronic document to a second process running on a computer, said second process enabling the display of a ruby dialogue window on a computer, said ruby dialogue window comprising a display mask comprising locations which are arranged in pairs, a first location of each pair for displaying a base text portion and a second location of each pair for displaying and editing corresponding rubies, said second process comprising: in case of an automatic ruby determination mode being set active, parsing said selected base text to detect individual words in said base text, identifying their corresponding rubies, if any, enabling the display of the detected words of said base text and enabling the display and the editing of the corresponding rubies which have been identified in said dialogue window on respectively different pairs of said first and second locations; in case of said automatic ruby determination mode being set inactive, enabling the display of each individual base text portion which has been selected on correspondingly different first locations of said pairs of locations, and enabling the user input of rubies corresponding to the base text portions displayed on said first locations at said second locations corresponding to said first locations; and if the selected text portion has been updated by a user input into said first process, receiving information on the newly selected text portion by said second process from said first process and rerunning said second process based on said updated text selection information.

## Description

### FIELD OF THE INVENTION

The present invention relates to a method for determining rubies, and in particular it relates to a ruby dialogue for determining, entering and editing ruby characters.

### DESECRIPTION OF THE RELATED ART

Ruby" is the commonly used name for a run of text that appears in the immediate vicinity of another run of text, referred to as the "base". Ruby serve as a pronunciation guide or a short annotation associated with the base text. Rubies are used frequently in Japan in most kinds of publications, such as books and magazines, but also in China or in Korea.

A ruby functionality is needed for computer programs which deal with Chinese, Japanese or Korean characters. Those characters - contrary to Western or Roman characters - often represent a word by a single character. Such Chinese characters (or Kanji) may be difficult to read because there are so many of them and one may not expect everybody to know all of them. Consequently, there is a need for expressing the way of reading a Chinese character by its phonetic transcription in order to enable people who do not recognize the character to nevertheless read it.

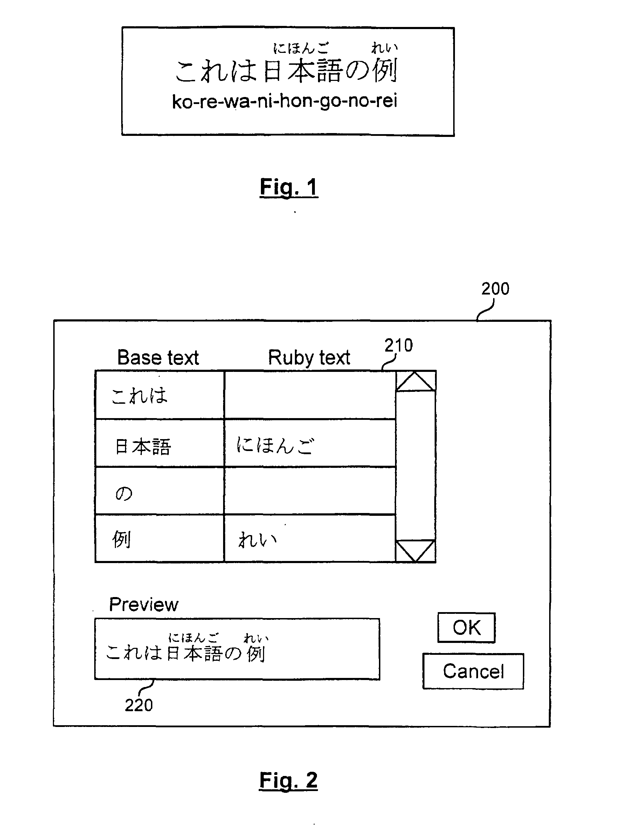

Figure 1 gives an example of a simple Japanese sentence in which the Chinese characters are superposed by their phonetic transcriptions. Those phonetic transcriptions are written using relatively simple characters which only represent the phonetic content of the Chinese character rather than its semantic meaning. Those characters which are used for the phonetic transcription are called "rubies", or in Japanese they are called "furigana".

In the example of Figure 1, the sentence would read in Roman characters "kore wa nihongo no rei" (which means "this is an example in Japanese"). Above the nouns "nihongo" and "rei" are their corresponding "rubies" in furigana. Even people who do not recognize the kanjis therefore can read the sentence because they can be assumed to recognize the relatively simple furigana transcription displayed above them. The transcription in Roman characters shown in the bottom line of Figure 1 is shown here for illustrative purposes only and will usually not be displayed.

The easy reading of rubies is possible because for the rubies only a limited set of relatively simple characters (about several dozens) are used while there exist thousands of very complicated Chinese characters (kanjis) which cannot be assumed to be known by everybody.

Additional information about rubies can be found in Appendix 1 which is a hardcopy of a webpage from the world wide web Consortium (W3C) which contains a draft specification of markup for Ruby and which also discusses some basics about ruby.

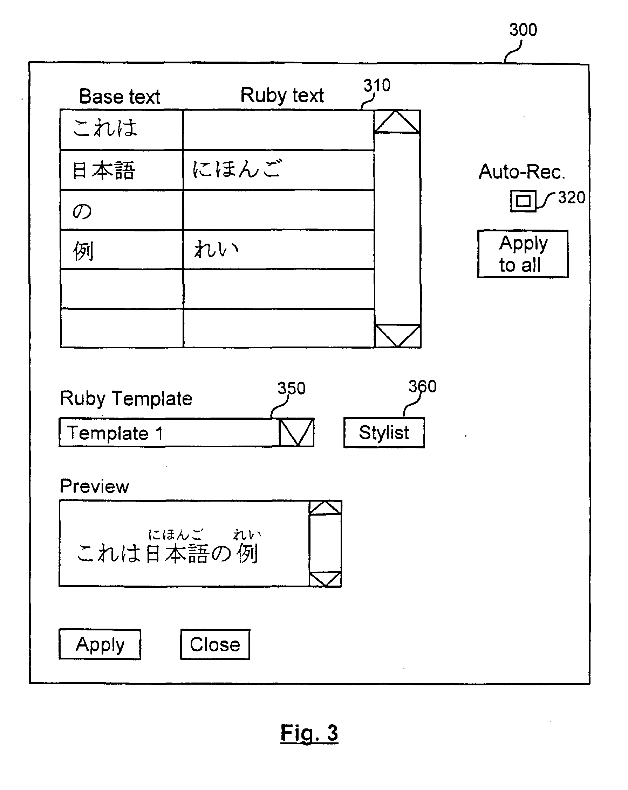

The present invention relates to the determination of which individual rubies (which ruby characters) should be displayed for a certain base text. A conventional ruby handling in this respect will now be illustrated in connection with Figure 2.

At first, a user selects a text portion for which he desires to generate rubies which then should be displayed superposed to (or above) the base text. In the example of Figure 2 it is assumed that the base text for which a ruby generation should be performed is the same as the text in Figure 1.

After having selected this text as a base text from a document, a user may then start the ruby functionality and subsequently a window as shown in Figure 2 pops up. In this window 200, one can see a table 210 which contains two columns, a first column for the selected base text and a second column for the corresponding rubies.

In a conventional ruby handling system there is provided an automatic ruby determination function for detecting individual words in the base text and for identifying corresponding ruby characters. Each individual word which is recognized as having corresponding rubies is displayed in a different row in table 210.

In table 210 one can see that the nouns "nihongo" and "rei" have been recognized by the automatic recognition functionality, and consequently each of those nouns is displayed in a different row of table 210, the noun "nihongo" in the second row and the noun "rei" in the fourth row.

The characters which are displayed in the first and the third base text row do not have corresponding ruby characters, therefore the corresponding ruby text cell is left empty. In preview window 220 the user is provided with a display of the base text together with the corresponding rubies. If the user does not agree with the proposed rubies, then he can edit the individual ruby text cells and consequently the preview also will change.

If the display in the preview window 220 is found to be correct by the user, then he may press the ok button and subsequently in the text document from which the base text has been selected there will be displayed the base text together with its corresponding rubies as it has been shown in the preview window 220.

It is an object of the present invention to provide a more flexible ruby functionality to the user than the conventional one.

### SUMMARY OF THE INVENTION

According to the present invention, there is provided a method for determining rubies for generating the display of a ruby annotation to an electronic document, said method comprising: receiving a user input by a first process running on a computer and operating on said electronic document as a working document to thereby select at least a portion of said electronic document as a base text for which a ruby annotation is to be generated; providing information on said at least one selected portion of said electronic document to a second process running on a computer, said second process enabling the display of a ruby dialogue window on a computer, said ruby dialogue window comprising a display mask comprising locations which are arranged in pairs, a first location of each pair for displaying a base text portion and a second location of each pair for displaying and editing corresponding rubies, said second process comprising: in case of an automatic ruby determination mode being set active, parsing said selected base text to detect individual words in said base text, identifying their corresponding rubies, if any, enabling the display of the detected words of said base text and enabling the display and the editing of the corresponding rubies which have been identified in said dialogue window on respectively different pairs of said first and second locations; in case of said automatic ruby determination mode being set inactive, enabling the display of each individual base text portion which has been selected on correspondingly different first locations of said pairs of locations, and enabling the user input of rubies corresponding to the base text portions displayed on said first locations at said second locations corresponding to said first locations; and if the selected text portion has been updated by a user input into said first process, receiving information on the newly selected text portion by said second process from said first process and rerunning said second process based on said updated text selection information.

The possibility to switch off the automatic ruby determination mode together with the updating of the text selection allows a very flexible handling of the ruby functionality. Rather than being dependent on the automatic recognition function a user can individually select the base text, can update the base text selection, and can then depending on his preferences insert and edit the corresponding ruby text.

According to a particular embodiment the text selection functionality comprises the capability of multi-selection for selecting multiple text portions. This enables a user to arbitrarily select text portions in a text document which can then simultaneously be handled in a single ruby dialogue.

According to a particular embodiment the text selection functionality offers an option to search for all occurrences of a certain text string (or a certain word) in a text document. For all occurrences of such a text string or a word the ruby handling can then be carried out in the same ruby dialogue without the necessity to repeatedly carry out the ruby dialogue.

According to a particular embodiment a ruby text which has been inserted or edited once for a certain text string can be applied to all other occurrences of this text string in the text document. This facilitates an easy ruby handling for multiple occurrences of a certain base text for which the same ruby text should be generated.

According to a particular embodiment there is provided a formatting option for formatting the ruby text according to formatting templates which may be generated and selected by a user. This allows for a high flexibility of the style in which the display of the ruby characters is carried out.

### BRIEF DESCRIPTION OF THE DRAWING

Figure 1 shows an example of a Japanese base text together with corresponding rubies.

Figure 2 illustrates an example of a conventional ruby handling procedure.

Figure 3 illustrates a ruby handling according to a first embodiment of the invention with automatic recognition being switched on.

Figure 4 illustrates a ruby handling according to an embodiment of the invention if automatic recognition is switched off.

Figure 5 illustrates the ruby dialogue of Figure 4 after an amendment of the base text selection.

Figure 6 illustrates the ruby dialogue window of Figure 5 after multi-selection has been used.

Figure 7 illustrates the ruby dialogue window of Figure 5 after a "search-for-all" has been performed.

Figure 8 shows a flow chart illustrating the ruby functionality according to an embodiment of the invention.

Figure 9 illustrates a multi-selection process according to an embodiment of the invention.

Figure 10 illustrates a ruby editing process in an embodiment according to the invention.

Figure 11A schematically illustrates a computer system which can be used in connection with an embodiment of the present invention.

Figure 11B illustrates a computer system which can be used in connection with the present invention.

### DETAILED DESCRIPTION

A ruby dialogue window according to an embodiment of the present invention is schematically illustrated in Figure 3. The window shown in Figure 3 resembles the window as shown in Figure 2. In particular, the table 310 in window 300 has the same contents as the table 210 in the window shown in Figure 2. This is because Figure 3 shows the status where the same base text is selected in a document for a ruby functionality, moreover, in the case of Figure 3 the automatic recognition function (automatic ruby determination) is switched "on" by toggle 320.

This means that in case of Figure 3 the ruby dialogue works as the conventional ruby dialogue shown in Figure 2.

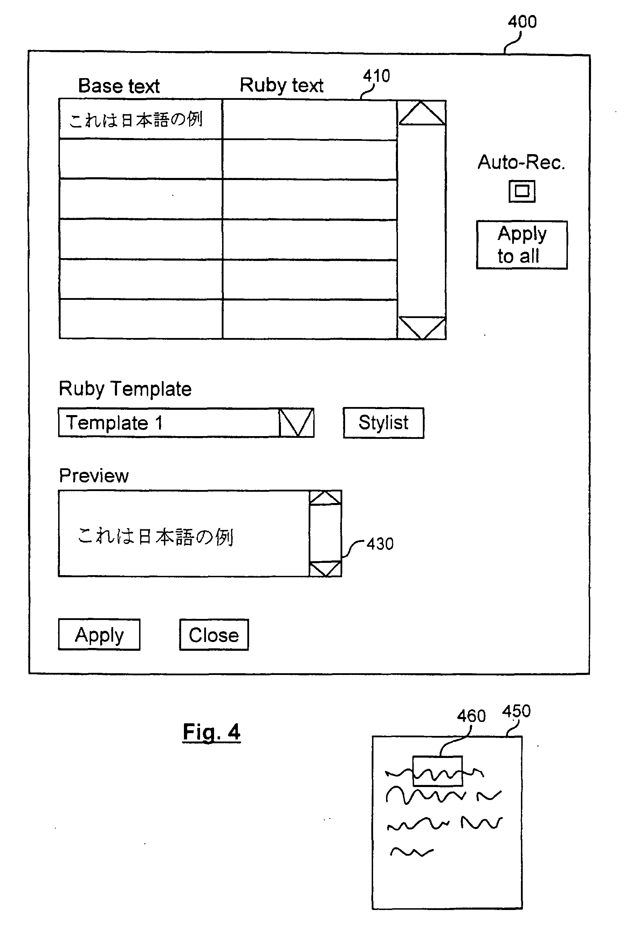

Turning now to Figure 4, there is shown the status after in the window shown in Figure 3 the toggle 320 has been pushed in order to switch the automatic ruby determination mode "off'.

Rather than the automatically searching for the ruby characters corresponding to the certain base text, no automatic ruby determination (and search) is performed. Rather the selected base text 460 selected from a document 450 is displayed in the first row of the table 410. One should also note that the corresponding ruby text cell is empty since the automatic recognition function has been turned off.

Consequently the preview window only shows the base text and does not display any ruby characters.

By switching the automatic recognition function (the automatic ruby determination) "off' the whole selected base text has been moved into the first row of table 410. The base text shown in this row of table 410 corresponds to a text portion 460 which has been selected in a text document 450 schematically illustrated in Figure 4. The selection can e.g. be carried by marking the text portion 460 which is to be selected by the mouse.

The ruby dialogue according to this embodiment is so-called mode-less dialogue. This means that the ruby dialogue window 400 shown in Figure 4 while being displayed does not prevent the user from working on the text document 450 from which the text portion 460 shown in the first row of table 410 has been selected. Both windows 450 and 400 may be displayed simultaneously on a screen, and a user may just change focus between the two windows as in the conventional windows technology and may work in any of both windows which is in the focus. Contrary to a modal dialogue which restricts the user to the specific functions offered by the dialogue a modeless dialogue does not contain such limitations.

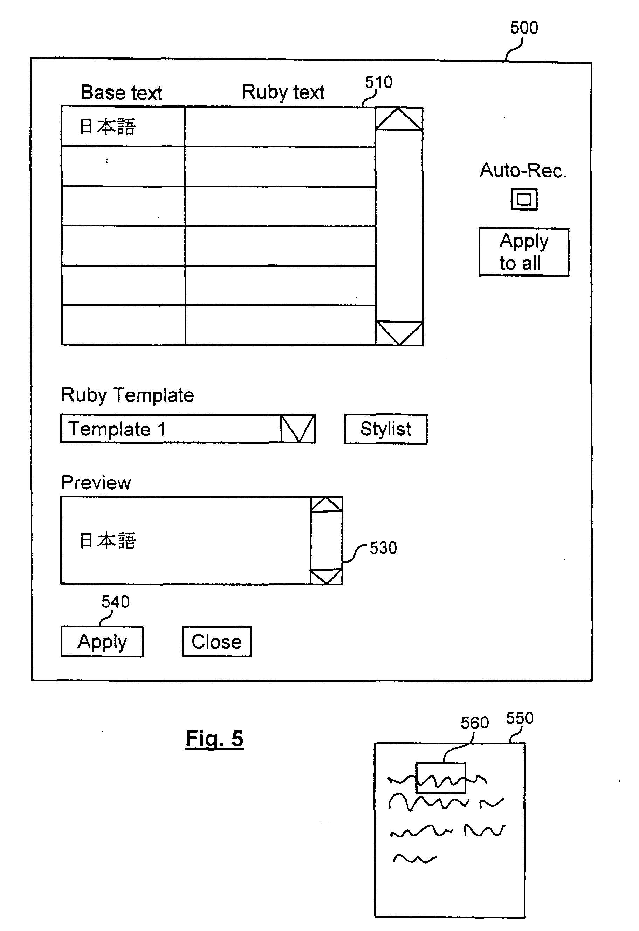

This means that a user can change the focus from the (modeless) ruby dialogue window 400 to the text document window 450 and can amend the selected text portion 460. The result of such amendment is exemplary shown in Figure 5.

In Figure 5 a text portion 560 is smaller than the text portion 460 of Figure 4 has been selected by the user in text document 550. Consequently in the first row of table 510 only a part of the base text which has been shown in table 410 of Figure 4 is displayed.

This means that due to the ruby dialogue being mode-less a user can in a very flexible manner select a base text for which a ruby functionality is desired. The selected text can then easily be altered due to the mode-less design of the ruby dialogue window. Despite the ruby dialogue being open a user can still change focus to working document 500, perform normal operations in the working document (such as text editing) or may even change the selection of the base text. Such an amendment of the base text selection will then directly affect the ruby dialogue the content of which will be updated based on the newly selected text.

Working document 500 may be any document on which some operation is performed, such as a text document edited by a word processor, a website displayed by a browser, an image containing some text, or any other document containing some text which can be selected as base text for the ruby generation.

After having selected the base text as shown in Figure 5, a user may according to his preferences enter the corresponding ruby text into table 510. If the user is satisfied with the selected base text and the ruby text which he has inputted he may push button 540 to apply the ruby functionality to the text document 550. Then for portion 560 of text document 550 the ruby characters as may have been shown in preview window 530 will be displayed.

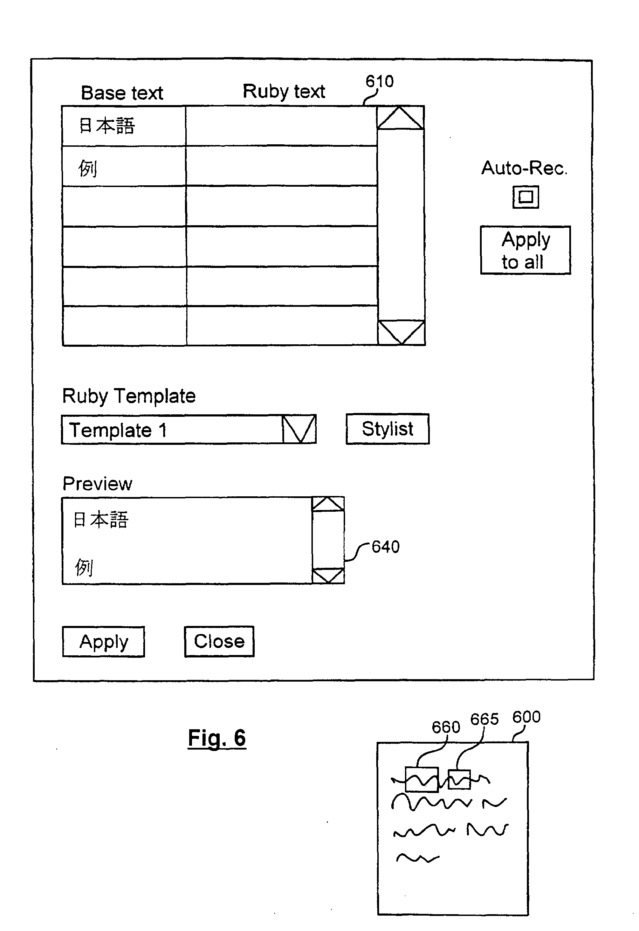

Figure 6 illustrates the ruby dialogue according to an embodiment of the present invention in connection with the so-called multi-selection capability. The multi-selection capability is a feature which is well known and which is offered by the Star Office Software produced by Sun Microsystems. By pressing the Ctrl-key on the keyboard a user can using the left mouse button select multiple text portions in a text document. This is exemplarily shown in connection with the ruby dialogue in Figure 6.

In text document 600 two text portions 660 and 665 have been selected using the multi-selection functionality. The first selected portion 660 is displayed as base text in the first row in table 610, the second selected text portion 665 is displayed in the second row of table 610. For the two text portions selected as the base text a user can then insert and edit a corresponding ruby text into table 610. This has the advantage that by carrying out the ruby dialogue only once a user can nevertheless apply the ruby functionality for arbitrarily selected text portions of the text document 600. Preview window 640 shows a preview of the selected base text and the corresponding rubies. In case of Figure 6 no rubies have been inputted yet, consequently no rubies are displayed.

A particular feature of the multi-selection functionality is the so-called "search for all" option which is also known from the StarOffice Software produced by Sun Microsystems. Using the "search" option in the task bar and selecting the option "search for all" a user can select for all occurrences of a certain word or a certain text in a text document.

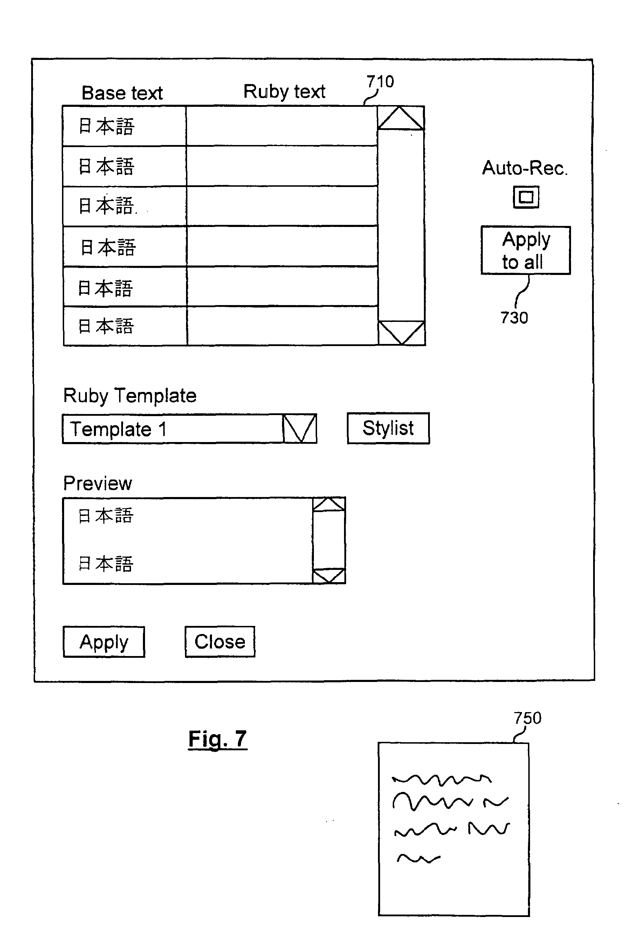

The application of this feature in connection with the ruby dialogue is illustrated now in connection with Figure 7. In tables 710 of the ruby dialogue window 700 each row contains the same base text, namely the term "nihongo". This is a result of searching for all occurrences of the term "nihongo" in text document 750. A user may now enter a corresponding ruby text into the first row of table 710, he may then press the "apply to all" button and consequently the ruby text inserted into the first row of table 710 will be pasted into all other rows. Thereby a user can easily generate an arbitrary ruby text for each occurrence of a certain word or a certain text string in a text document 750.

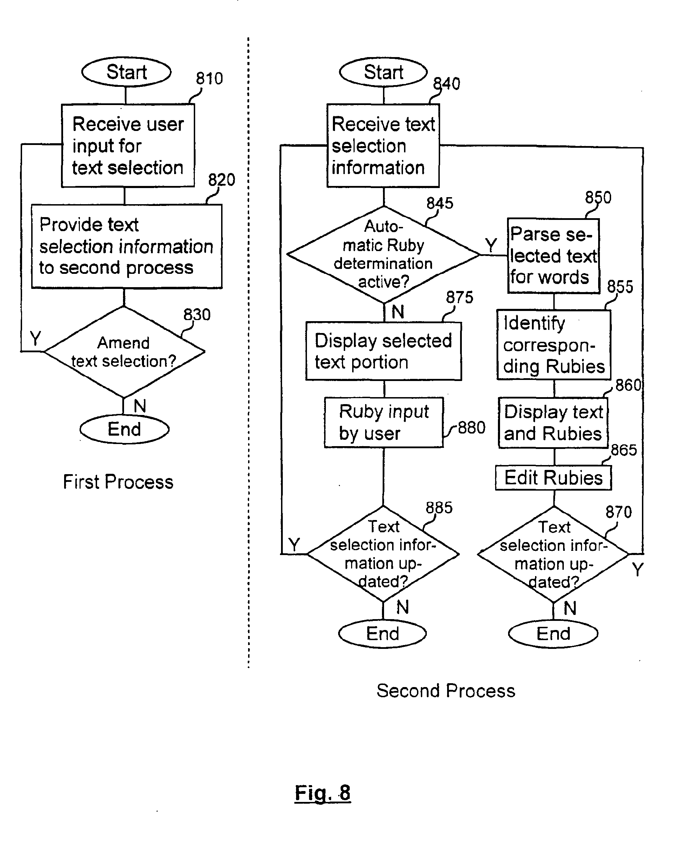

Figure 8 shows a flowchart illustrating the ruby functionality according to an embodiment of the present invention.

The left-hand-side of Figure 8 illustrates a first process running on a computer, the right-hand side illustrates a second process running on a computer. The first process may for example correspond to a part of an application program by means of which some operations on a working document are performed. The second process may e.g. correspond to operations performed by a ruby dialogue (or a ruby dialogue window). In a particular embodiment the process 1 may be a parent process (or a parent window) and process 2 may be a child process (or child window) which is called from parent process 1. For example, child process 2 may be called from parent process 1 by pressing a certain key of the keyboard or by selecting a menu item from the task bar which may e.g. be labeled "ruby functionality".

In step 810 the first process receives a user input from a user. Thereby a text portion of the working document 500 of Fig. 5 is selected. This can e.g. be done by using the mouse for marking some text portion in the well known manner. In step 820 some information on the selected text is provided to the second process. This can be done in many ways. E.g. the selected text may directly be copied into the second process, or a pointer to a starting location of the selected text together with a length of the selected text could be passed over from the first to the second process. Another possibility would be to deliver a stream from process 1 to process 2, with an EOF marker indicating the end of the selected text.

In step 840 belonging to process 2 the information on the selected text is received. In step 845 it is then determined whether the automatic ruby detection mode is set active. If yes, then in steps 850 to 865 a conventional ruby handling is performed. At first the selected text is parsed to detect individual words by any known parsing method, then corresponding rubies are identified by looking in a database whether for the detected words the exist any rubies. The rubies so identified are then displayed together with the corresponding base text as shown e.g. in Fig. 3

If in step 845 the automatic determining mode is detected to be inactive, then in step 875 all the selected text portion is displayed in the first row of table 510 as shown in Fig. 5. Since no automatic detection is carried out no individual words are detected, consequently in step 875 the whole selected text is displayed in a single row of table 510 and no rubies are displayed. Table 510 is a mask for displaying the base text and the corresponding rubies. Each row of table 510 comprises two cells, the left cell for the base text and the right cell for the corresponding rubies. If a single base text portion has been selected and the corresponding selection information has been received by process 2, and if further the automatic determination mode is set inactive, then the whole base text portion is displayed in the left cell of the first row of table 510. The right cell is provided for allowing a user to input the rubies corresponding to the selected base text.

In step 880 a user may then input the rubies corresponding to the selected base text into the second cell of the first row of table 510.

If a user is not satisfied with the selected base text, then at any time he may amend the text selection in process 1. This can be done because process 1 and process 2 do not block each other but rather are running in parallel to each other. E.g. by changing the focus window as in the conventional windows system a user may switch focus between process 1 (which may be a word processing operation) and process 2 (the ruby dialogue window). After having changed focus to process 1 or to its corresponding window (which is a well known operation and is therefore not shown in Fig. 8) a user may request to alter the text selection (e.g. by pressing the left mouse button and marking some text). This operation is detected in step 830, the corresponding user input is received in step 810 and passed over to process 2 in step 820. Such an alteration of the selected text portion will be recognized by step 885 (or step 870 in case of automatic recognition) of process 2 and will cause process 2 to be reexecuted.

Consequently a continous updating of the text selection information is carried out, and an alteration of the base text selection is possible at any time (the ruby dialogue can be said to be modeless). This provides a very flexible ruby dialogue to the user.

According to a further embodiment in case of automatic recognition being set active after step 870 and before process 2 ends there may be carried out a further check (not shown in Fig. 8) whether the automatic recognition is still active. If no, the procedure would then jump to step 875 and the operation will proceed as described before. Since no automatic recognition would be performed, the column for the rubies (right column in table 510 of Fig. 5) would then become empty as soon as the automatic recognition function would have been switched of, furthermore the whole selected base text would move into the first row of table 510 (because no words are detected). If the automatic recognition would still be active, then process 2 would end.

This has the advantage that in case of the automatic recognition being inactive the granularity of the base text portions and how they are displayed in table 510 only depends on the user selection of the base text and not on the results of the automatic recognition function (as e.g. in case of Fig. 3).

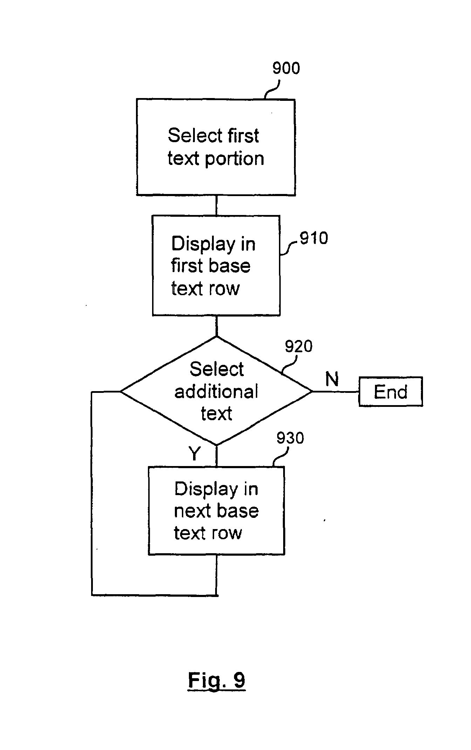

Figure 9 shows a flowchart illustrating the text selection of multiple text portions in connection with its display in the ruby table of the ruby dialogue window. As has been explained before already, multiple text portions can be selected as base text. In step 900 a first text portion is selected, this first portion is displayed in the first base text row as illustrated in step 910. If additional text is selected in step 920, then this text is displayed in the next base text row of the table in the ruby dialogue window according to step 930 and the procedure returns to step 920 due to the mode-less character of the ruby dialogue. If no additional text is selected, then the procedure ends.

As explained before, when text is selected corresponding information is passed over from process 1 to process 2. If multiple text portions are selected, then a corresponding plurality of informations is passed over, e.g. a plurality of pointers of the like. The ruby dialogue window is generated by process 2 and it comprises a mask in which locations for display and editing are arranged in pairs, each pair comprising a first location for a base text portion and a second location for corresponding rubies (if any). If multiple text portions are passed over to process 2, then they are displayed in correspondingly different first locations. If the mask takes the form of a table, as in Figures 1 to 7, then each individual selected base text portion is displayed in a different row in the left cell of said row.

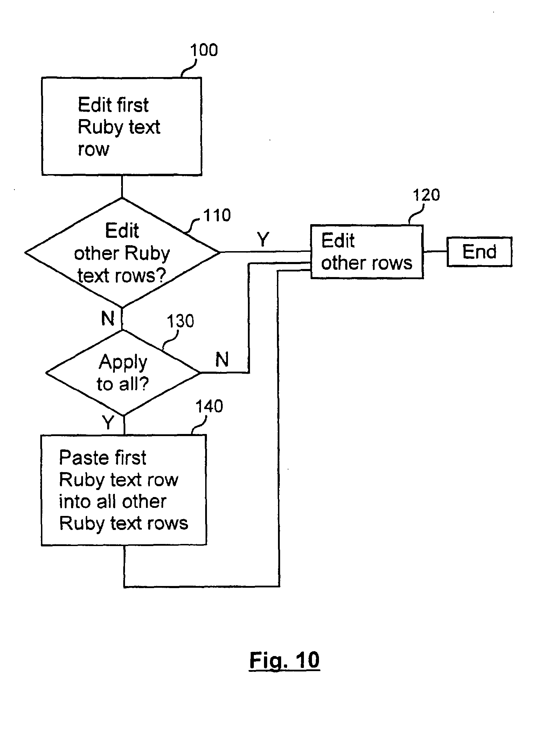

Figure 10 shows a flowchart illustrating the "search for all" option in connection with the ruby dialogue. A ruby text in the first row of the table in the ruby dialogue window is edited in step 100. Check box 110 checks whether or not other rows are to be edited (step 120 if yes), if no then check box 130 asks whether or not the first ruby text row should be applied to all other ruby text rows. If yes, then in step 140 the text of the first ruby text row is pasted into all other ruby text rows, the result may again be amended by the user by returning to step 120 and then the procedure ends. Thereby a certain ruby text can be easily generated for multiple occurrences of a certain base text in a text document.

For a ruby text generated as described before a user may select a certain style or format according to his preferences. This will now be explained by referring again to Figure 3. Figure 3 shows a pull-down menu 350 from which a user can select a certain template. The concept of templates is known from the StarOffice Software produced by Sun Microsystems. It offers the user the possibility to define and select certain formats which then are applied to a text. A template may e.g. consist in the selection of a certain font, a certain font size, whether or not the style is bold-faced or not, courier or not, etc. Such templates may be generated using the stylist-option 360 shown in Figure 3. This option is known from the StarOffice Software already and will therefore not be explained in detail here.

After the base text and the corresponding rubies have been determined as described before (and accepted by the user, e.g. by pressing an OK button not shown), they may be displayed in the working document. The display of the rubies can be carried out in a conventional manner and will therefore not be described in detail here.

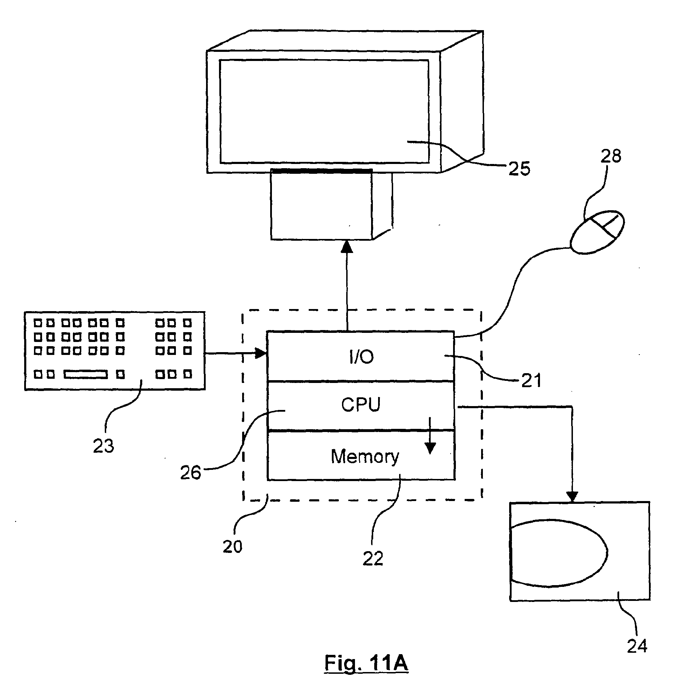

The present invention is applicable to a hardware configuration like a personal computer or a work station as illustrated schematically in Figure 11A. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

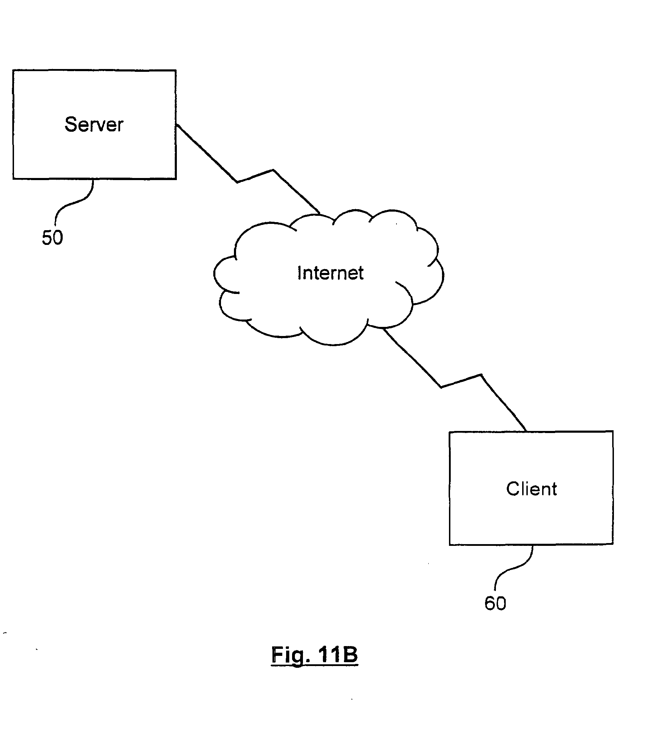

The invention, however, may also be applied to a client-server configuration as illustrated in Figure 11B. The document may be displayed on a display screen of a client device 60 while some or all steps of the method as illustrated before in connection with Figures 1 to 7 are carried out on one or more server computer accessible by a client device over a data network such as the internet using a browser application or the like.

While the invention has been particularly shown with the reference to embodiments thereof, it will be understood by those skilled in the art that various other changes in the form and details may be made therein without departing from the spirit and scope of the invention. For example, the arrangement of a display of selected base text and corresponding ruby not necessarily has to take place in the form of a table, any other arrangement can be chosen as well which allows the user to identify pairs of base text and corresponding ruby, e.g. an arrangement in pairs of lines one after another.

## Claims

1. A method for determining rubies for generating the display of a ruby annotation to an electronic document, said method comprising:
receiving a user input by a first process running on a computer and operating on said electronic document as a working document to thereby select at least a portion of said electronic document as a base text for which a ruby annotation is to be generated;
providing information on said at least one selected portion of said electronic document to a second process running on a computer, said second process enabling the display of a ruby dialogue window on a computer, said ruby dialogue window comprising a display mask comprising locations which are arranged in pairs, a first location of each pair for displaying a base text portion and a second location of each pair for displaying and editing corresponding rubies, said second process comprising:
in case of an automatic ruby determination mode being set active, parsing said selected base text to detect individual words in said base text, identifying their corresponding rubies, if any, enabling the display of the detected words of said base text and enabling the display and the editing of the corresponding rubies which have been identified in said dialogue window on respectively different pairs of said first and second locations;
in case of said automatic ruby determination mode being set inactive, enabling the display of each individual base text portion which has been selected on correspondingly different first locations of said pairs of locations, and enabling the user input of rubies corresponding to the base text portions displayed on said first locations at said second locations corresponding to said first locations; and
if the selected text portion has been updated by a user input into said first process, receiving information on the newly selected text portion by said second process from said first process and rerunning said second process based on said updated text selection information.

2. A method for determining rubies for generating a ruby annotation to an electronic document, said method comprising:
selecting a base text for which a ruby annotation is to be generated by a user input into a first process running on a computer and operating on said electronic document as a working document to thereby select at least a portion of said electronic document;
after information on said at least one selected portion of said electronic document having been provided to a second process running on a computer, displaying by said second process a ruby dialogue window on a computer, said ruby dialogue window comprising a display mask comprising locations which are arranged in pairs, a first location of each pair for displaying a base text portion and a second location of each pair for displaying and editing corresponding rubies, said second process comprising:
in case of an automatic ruby determination mode being set active, after having parsed said selected base text to detect individual words in said base text, and after having identified their corresponding rubies, if any, displaying the detected words of said base text and displaying and editing the corresponding rubies which have been identified in said dialogue window on respectively different pairs of said first and second locations;
in case of said automatic ruby determination mode being set inactive, displaying of each individual base text portion which has been selected on correspondingly different first locations of said pairs of locations, and inputting by a user rubies corresponding to the base text portions displayed on said first locations at said second locations corresponding to said first locations; and
if the selected text portion has been updated by a user input into said first process, receiving information on the newly selected text portion by said second process from said first process and rerunning said second process based on said updated text selection information.

3. The method of claim 1 or 2, wherein
multiple text portions can be selected by said user input.

4. The method of one of claims 1 to 3, wherein
in case of said automatic ruby determination being set active, each individual word which has been detected in a selected base text is displayed in a different row of a first column of a table, with the corresponding ruby characters being displayed in the same row but in the second column of said table.

5. The method of one of claims 1 to 4, wherein
in response to said user input all occurrences of a certain word or text string in a document are selected as selected text portions.

6. The method of one of claims 1 to 5, further comprising:
in case of all occurrences of a certain word or text string being selected as a base text for ruby generation, determining the corresponding ruby text by inserting said corresponding ruby text only once for all occurrences of said text string selected as base text.

7. The method of one of claims 1 to 6, further comprising:
providing a formatting option for formatting the ruby text according to formatting templates which may be generated and selected by a user.

8. The method of one of claims 1 to 7, wherein
said pair of first and second locations are the fields of a row of a table comprising two columns; and
said ruby dialogue window is a modeless dialogue window.

9. A software tool for determining rubies for generating the display of a ruby annotation to an electronic document, said software tool comprising:
a module for receiving a user input by a first process running on a computer and operating on said electronic document as a working document to thereby select at least a portion of said electronic document as a base text for which a ruby annotation is to be generated;
a module for providing information on said at least one selected portion of said electronic document to a second process running on a computer, said second process enabling the display of a ruby dialogue window on a computer, said ruby dialogue window comprising a display mask comprising locations which are arranged in pairs, a first location of each pair for displaying a base text portion and a second location of each pair for displaying and editing corresponding rubies, said second process comprising:
a module for in case of an automatic ruby determination mode being set active, parsing said selected base text to detect individual words in said base text, identifying their corresponding rubies, if any, enabling the display of the detected words of said base text and enabling the display and the editing of the corresponding rubies which have been identified in said dialogue window on respectively different pairs of said first and second locations;
a module for in case of said automatic ruby determination mode being set inactive, enabling the display of each individual base text portion which has been selected on correspondingly different first locations of said pairs of locations, and enabling the user input of rubies corresponding to the base text portions displayed on said first locations at said second locations corresponding to said first locations; and
a module for if the selected text portion has been updated by a user input into said first process, receiving information on the newly selected text portion by said second process from said first process and rerunning said second process based on said updated text selection information.

10. A software tool for determining rubies for generating a ruby annotation to an electronic document, said software tool comprising:
a module for selecting a base text for which a ruby annotation is to be generated by a user input into a first process running on a computer and operating on said electronic document as a working document to thereby select at least a portion of said electronic document;
a module for after information on said at least one selected portion of said electronic document having been provided to a second process running on a computer, displaying by said second process a ruby dialogue window on a computer, said ruby dialogue window comprising a display mask comprising locations which are arranged in pairs, a first location of each pair for displaying a base text portion and a second location of each pair for displaying and editing corresponding rubies, said second process comprising:
a module for in case of an automatic ruby determination mode being set active, after having parsed said selected base text to detect individual words in said base text, and after having identified their corresponding rubies, if any, displaying the detected words of said base text and displaying and editing the corresponding rubies which have been identified in said dialogue window on respectively different pairs of said first and second locations;
a module for in case of said automatic ruby determination mode being set inactive, displaying of each individual base text portion which has been selected on correspondingly different first locations of said pairs of locations, and inputting by a user rubies corresponding to the base text portions displayed on said first locations at said second locations corresponding to said first locations; and
a module for if the selected text portion has been updated by a user input into said first process, receiving information on the newly selected text portion by said second process from said first process and rerunning said second process based on said updated text selection information.

11. The software tool of claim 9 or 10, wherein
multiple text portions can be selected by said user input.

12. The software tool of one of claims 9 to 11, wherein
in case of said automatic ruby determination being set active, each individual word which has been detected in a selected base text is displayed in a different row of a first column of a table, with the corresponding ruby characters being displayed in the same row but in the second column of said table.

13. The software tool of one of claims 9 to 12, wherein
in response to said user input all occurrences of a certain word or text string in a document are selected as selected text portions.

14. The software tool of one of claims 9 to 13, further comprising:
in case of all occurrences of a certain word or text string being selected as a base text for ruby generation, determining the corresponding ruby text by inserting said corresponding ruby text only once for all occurrences of said text string selected as base text.

15. The software tool of one of claims 9 to 14, further comprising:
providing a formatting option for formatting the ruby text according to formatting templates which may be generated and selected by a user.

16. The software tool of one of claims 9 to 15, wherein
said pair of first and second locations are the fields of a row of a table comprising two columns; and
said ruby dialogue window is a modeless dialogue window.

17. A computer program product comprising computer executable program code for enabling a computer to carry out a method according to one of claims 1 to 8.

18. A computer program comprising computer executable program code for enabling a computer to carry out a method according to one of claims 1 to 8.
